# EUROPEAN PATENT SPECIFICATION

(11) **EP 3 114 384 B1**
(45) Date of publication and mention of the grant of the patent: **11.09.2019**
(21) Application number: 14709905.5
(22) Date of filing: 05.03.2014
(51) Int. Cl.: F16L 25/00, F16L 33/22, F16L 37/098, F16L 37/133, F16L 37/138

(54) **CLAMP NUT FOR QUICK HOSE COUPLING**
SPANNMUTTER ZUR SCHNELLEN SCHLAUCHKUPPLUNG
ÉCROU DE SERRAGE POUR RACCORDEMENT DE TUYAU RAPIDE

(43) Date of publication of application: 11.01.2017
(73) Proprietor: Husqvarna AB, 561 82 Huskvarna (SE)
(72) Inventor: TATIC, Aleksandar, 89079 Ulm (DE)
(74) Representative: Finkele, Rolf
(86) International application number: PCT/EP2014/054217
(87) International publication number: WO 2015/131932

(56) References cited:
- EP-A1- 1 022 504
- DE-A1- 4 433 812
- DE-A1- 19 526 884
- DE-C1- 19 809 290
- FR-A1- 2 273 219
- US-A- 5 915 736
- US-A1- 2012 051 710

## Description

### TECHNICAL FIELD

Example embodiments generally relate to watering equipment and, more particularly, relate to a clamp nut design to improve performance and operator experience relative to employment of a hose coupling system.

### BACKGROUND

Gardening and yard maintenance, like so many other pursuits, are made easier and more enjoyable when the right tools are available to the gardener for each job. Every garden or yard needs suitable and effective water application. When Mother Nature is not cooperative, or for covered areas, watering equipment may be necessary to provide adequate water supply.

Watering equipment includes such devices as hoses, hose reels, spray guns, spray lances, water taps (or spigots) and the like. These devices are often used to apply water from the water tap to a garden, plant or other target using the hose along with some form of water application device (e.g., an applicator such as a spray gun or spray lance). Most homes, gardens, yards or even businesses have one or more water taps provided at fixed locations. In some cases, the locations of multiple such water taps may be dispersed to improve accessibility and allow water to be provided using shorter hoses to various different locations. Thus, the gardener could install one hose at each of multiple water taps so that watering can be accomplished from each of the various locations. However, in some cases, the gardener may prefer to have a fewer number of hoses, reels, and/or water applicators than the number of water taps. In such cases, it may be necessary for the gardener to disconnect the hoses from water taps and/or disconnect applicators from the hose and change the configuration of the watering equipment.

When changing the configuration of the watering equipment by moving a hose and changing an applicator, it is typically necessary for the gardener to unscrew the hose from the water tap and also unscrew the applicator from the opposite end of the hose. These unscrewing operations are then reversed when the hose is moved as the hose is screwed onto the new water tap and a new applicator is screwed on to the other end of the hose. These unscrewing and screwing operations can be time consuming and tedious to undertake. Accordingly, it may be desirable to use watering equipment that employs quick coupling solutions that obviate the need to repeatedly engage in screwing/unscrewing.

Quick coupling solutions may include a tap connector that is screwed onto the water tap and can remain there ready to be quickly connected (without further screwing) to a hose that is coupled to a hose connector. The hose connector and the water tap may be quickly and easily snap fit together and removed with a push on the sleeve of the hose connector (instead of a screwing operation). Water applicators may be attachable to the other end of the hose using a similar hose connector assembly. Thus, the watering equipment may be easily reconfigured without repeated screwing and unscrewing operations. However, the quick coupling solutions require some setup, and should preferably be designed to be durable and easy to operate. The documents DE19526884 and FR2273219 show typical arrangements for quick connectors.

### BRIEF SUMMARY OF SOME EXAMPLES

Some example embodiments may therefore provide a structure for a clamp nut that may form a portion of a hose connector. In this regard, a clamp nut structure is provided that can be easily grasped by the gardener (or user) and directs the fingers of the user to the most advantageous part of the clamp nut for the application of force onto the clamp nut. As such the clamp nut is provided with a haptic region that can be felt by the user and naturally guides the user's fingers to a desirable location on the clamp nut for the application of force to screw or unscrew the clamp nut.

A hose coupling device is provided. The hose coupling device include a main body, a sleeve portion and a screw nut. The main body defines a through channel for water flow between a first end of the device to a second end of the device. The through channel extends along an axis of the device. The main body may further define a coupler receiver portion disposed at the first end of the device and a hose coupling portion disposed at the second end of the device. The sleeve portion slidably engages the main body to releasably engage a coupler received in the coupler receiver portion based on movement of the sleeve portion in an axial direction. The screw nut is disposed proximate to the hose coupling portion to selectively facilitate engagement of the hose coupling portion with a hose inserted at the hose coupling portion by exerting a clamping force on the hose responsive to tightening of the screw nut. The screw nut includes an annular body having first end and a second end. An internal periphery of the annular body includes a threaded portion at the first end of the annular body. An external periphery of the annular body includes a haptic region extending around the external periphery. The haptic region is disposed at a portion of the external periphery that is spaced apart from both the first end and the second end of the annular body. The haptic region extends over less than half of a length of the screw nut in the axial direction.

In accordance with another example embodiment, the hose coupling device includes a main body and a screw nut. The main body defines a through channel for water flow between a first end of the device to a second end of the device. The through channel extends along an axis of the device. The main body further defines a hose coupling portion disposed at the first end or second end of the device. The screw nut is disposed proximate to the hose coupling portion to selectively facilitate engagement of the hose coupling portion with a hose inserted at the hose coupling portion by exerting a clamping force on the hose responsive to tightening of the screw nut. The screw nut includes an annular body having first end and a second end. An internal periphery of the annular body includes a threaded portion at the first end of the annular body. An external periphery of the annular body includes a haptic region extending around the external periphery. The haptic region is disposed at a portion of the external periphery that is spaced apart from both the first end and the second end of the annular body. The haptic region extends over less than half of a length of the screw nut in the axial direction.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1A illustrates a side view of a hose connector in accordance with an example embodiment;
FIG. 1B illustrates a cross section view of the hose connector of FIG. 1A taken along line B-B in accordance with an example embodiment;
FIG. 1C illustrates a prespective view of the hose connector in accordance with an example embodiment;
FIG. 2A illustrates a side view of a clamp nut that may form a portion of the hose connector in accordance with an example embodiment;
FIG. 2B is a cross section view of an area of the clamp nut taken along the line A-A of FIG. 2A in accordance with an example embodiment;
FIG. 2C is a top view of the clamp nut in accordance with an example embodiment;
FIG. 3A illustrates a perspective side view of the clamp nut on a repair assembly in accordance with an example embodiment; and
FIG. 3B illustrates a cross section view of the repair assembly in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments described herein provide an improved clamp nut design for a hose connector or repair assembly. The clamp nut may be employed to adapt a hose for use with a quick coupling assembly or for repairing damaged hoses. In this regard, the hose may be provided onto a hose coupling portion of the hose connector or repair assembly and then the clamp nut may be screwed onto the hose coupling portion of the hose connector or repair assembly in a manner that clamps the hose to the hose coupling portion. For hoses coupled to a hose connector, the hose connector can then easily be used within a quick coupling watering equipment system. Thus, by using the hose connector, a screw/unscrew operation need only be accomplished one time (i.e., to connect the hose to the hose connector) and thereafter all connections of the hose to water taps or applicators (or other hoses) may be accomplished without screw/unscrew operations, but instead via quick coupling. The user experience and ease of mobility, reconfiguration and operability of watering equipment may therefore be greatly improved.

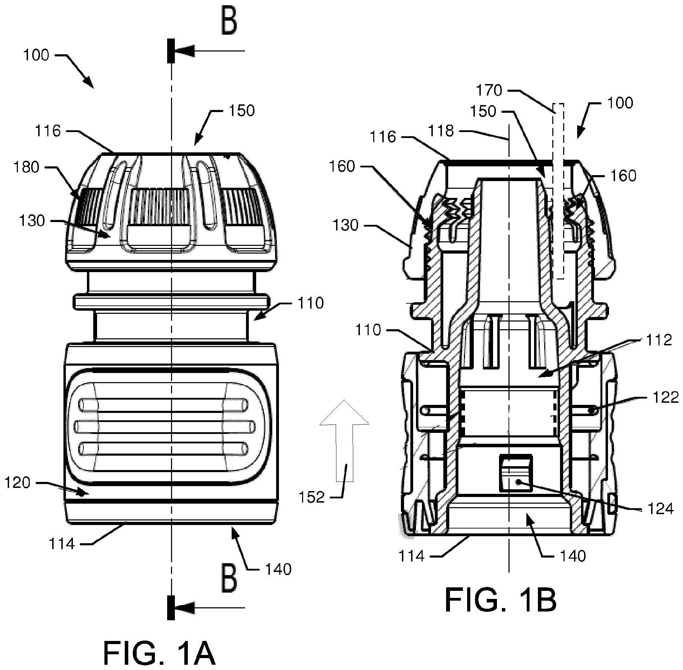

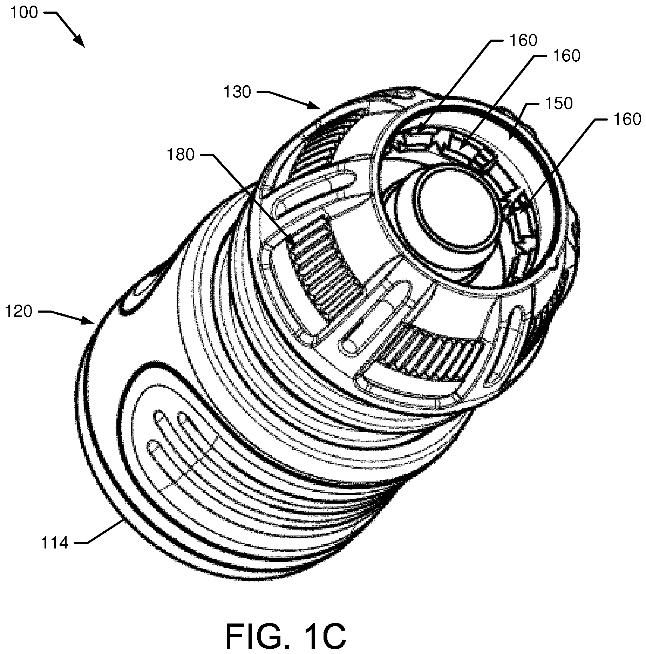

FIG. 1, which includes FIGS. 1A and 1B, illustrates a hose connector 100 (or hose coupling device) in accordance with an example embodiment. It should be appreciated, however, that the hose connector 100 of FIG. 1 merely represents one example of a piece of watering equipment on which an example embodiment may be employed. Referring to FIG. 1, the hose connector 100 includes a main body 110, a sleeve portion 120 and a screw nut 130 (or clamp nut).

The main body 110 may be molded plastic, composite material, metal, or any other suitable material that has sufficient rigidity and is formed to define a through channel 112 for water flow between a first end 114 of the device to a second end 116 of the device. The through channel 112 extends along an axis 118 of the hose connector 100. The main body 110 further defines a coupler receiver portion 140 disposed at the first end 114 of the hose connector 100 and a hose coupling portion 150 disposed at the second end 116 of the hose connector 100. In an example embodiment, the coupler receiver portion 140 may be configured to receive a coupler of another component (e.g., a tap connector, an applicator, or some other device having a quick coupler) of the watering equipment system. As such, the coupler may be a male component that is insertable into the coupler receiver portion 140 to form a substantially water-tight connection through which water may flow without substantial leakage. In some cases, the coupler may include an O-ring or other component to mate with an internal surface or internal periphery of the coupler receiver portion 140 to facilitate leakage prevention. The coupler and the coupler receiver portion 140 may be shaped to correspond to each other to facilitate coupling thereof.

The sleeve portion 120 slidably engages the main body 110 to releasably engage the coupler when the coupler is received in the coupler receiver portion 140. In particular, the sleeve portion 120 is configured to move in an axial direction as indicated by arrow 152 relative to the main body 110 responsive to manual application of a force in the axial direction by the user. In some cases, the sleeve portion 120 may be biased against movement in the axial direction of arrow 152 by a biasing element (e.g., spring 122). The biasing element may also return the sleeve portion 120 to a rest position after each manual release operation initiated by the user.

In an example embodiment, a clasp 124 may be positioned in a portion of the coupler receiver portion 140 to enable the coupler to seat in the coupler receiver portion 140 responsive to insertion therein, and to enable the coupler to be held by the clasp 124 after insertion. The clasp 124 may also be operably coupled to the sleeve portion 120 to be released responsive to movement of the sleeve portion 120 in the axial direction. Thus, the clasp 124 may lock the coupler into the coupler receiver portion 140 when the coupler is inserted therein, but the clasp 124 may release the coupler when the sleeve portion 120 is moved in the axial direction.

The screw nut 130 is configured for threaded engagement with the main body 110 proximate to the hose coupling portion 150. The hose coupling portion 150 enables a hose to be inserted over a portion of the main body 110 that defines the through channel 112 proximate to the second end 116. The main body 110 further includes clamping members 160 that extend along the axial direction to enable the hose to be inserted between the clamping members 160 and the portion of the main body 110 that defines the through channel 112. The clamping members 160 may be threaded along an external periphery thereof in order to engage with the screw nut 130. When the screw nut 130 is engaged with the threads of the clamping members 160 and the screw nut 130 is tightened onto the clamping members 160, the clamping members 160 clamp, pinch or otherwise provide a force on the hose to hold the hose in the hose coupling portion 150. As such, the screw nut 130 is configured to selectively facilitate engagement of the hose coupling portion 150 with a hose inserted at the hose coupling portion 150 by exerting a clamping force on the hose responsive to tightening of the screw nut 130.

The screw nut 130 is therefore screwed onto the main body 110 to fixedly couple the hose to the main body 110. Dashed lines are used to identify a cross section view of a portion of a hose 170 inserted at the hose coupling portion 150. The remainder of the hose is removed to provide a better view of the hose coupling portion 150, but it should be appreciated that the hose 170 may wrap entirely around the hose coupling portion 150 and be clamped thereto by the clamping members 160 when the screw nut 130 is tightened.

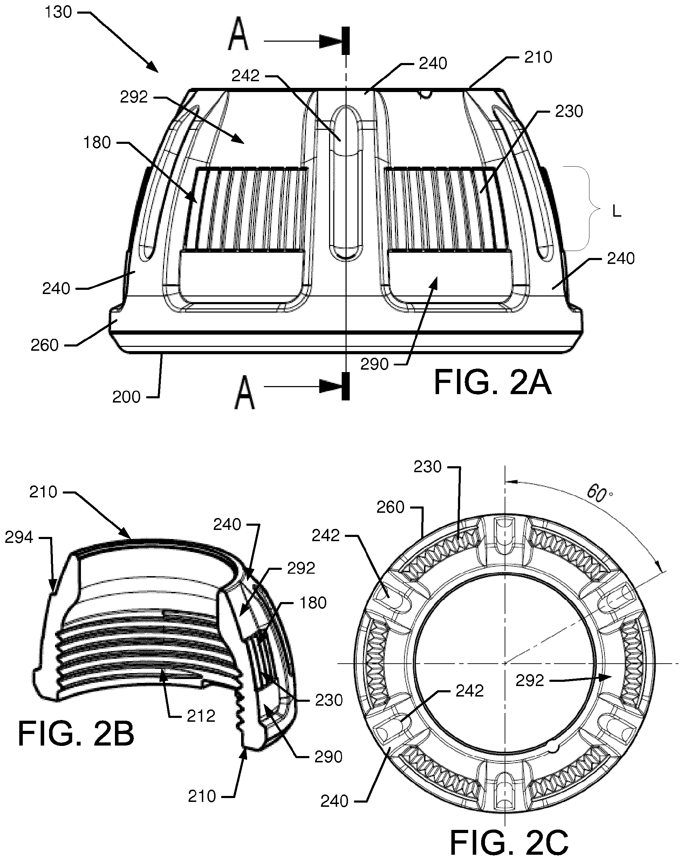

In some cases, the operator may have wet hands and/or may be attempting to quickly assemble the hose connector 100 onto the hose, so it is useful to provide guidance to the user as to where to grasp the screw nut 130 to achieve a good grip and apply needed torque for operation of the screw nut 130. To facilitate guiding the user to find the right place to grasp the screw nut 130, a haptic region 180 (or feedback region) is provided on the screw nut 130. The haptic region 180 gives the user an intuitive guide as to the best place to grasp the screw nut 130 for operation. Details of the haptic region 180 and the construction of the screw nut 130 are described in greater detail in reference to FIG. 2.

Referring now to FIG. 2, which includes FIGS. 2A, 2B and 2C, the screw nut 130 is configured and designed as an annular body having first end 200 and a second end 210. An internal periphery of the annular body includes a threaded portion 212 extending toward the second end 210 from a point proximate to the first end 200 of the annular body. An external periphery of the annular body includes the haptic region 180. Moreover, the haptic region 180 extends entirely around the external periphery to form a ring of features capable of providing haptic feedback to the user or operator. The haptic region 180 is disposed at a portion of the external periphery that is spaced apart from both the first end 200 and the second end 210 of the annular body. The haptic region 180 is spaced apart from the respective ends by a distance at least equal to the length of the haptic region (L) in the axial direction. Furthermore, in some embodiments, the haptic region 180 may be disposed at a midpoint between the first end 200 and the second end 210 of the annular body.

The haptic region 180 includes or otherwise is defined by a plurality of ribs 230 extending in the axial direction. The ribs 230 are linear protrusions or grooves formed in or on the surface of the external periphery of the screw nut 130. The protrusions or grooves forming the ribs 230 are of sufficient size or depth to be readily detectable by fingers of the user when contact between the fingers and the haptic region 180 is made. The ribs 230 extend substantially parallel to the axial direction on the outer surface of the screw nut 130.

The ribs 230 are divided or interrupted by the existence of ridges 240. The ridges 240 are raised portions of material that may be provided at equidistant intervals around the external periphery of the screw nut 130. As such, the ridges 240 are substantially linear protrusions formed at the surface of the external periphery of the screw nut 130 to extend along the external periphery of the screw nut 130 substantially in the axial direction. Thus, the ridges 240 also extend substantially parallel to the direction of extension of the ribs 230. The protrusions forming the guide ridges 240 are of sufficient size to be readily detectable by fingers of the user when contact between the fingers and ridges 240 is made. The ridges 240 may therefore provide a suitable feature for the user to grasp for the application of torque to rotate the screw nut 130 for tightening or loosening thereof. Meanwhile, the ribs 230 of the haptic region 180 guide the user to an advantageous position on the ridges 240 (e.g., near the middle) to facilitate quick finding and gripping of the ridges 240 even without visually sighting the haptic region 180 or with wet or dirty hands. The combination of the haptic region 180 guiding the user to the ridges 240 and the extra grip afforded the user by the ribs 230 proximate to the ridges 240 ensures that the user gets maximum ability to exert rotational forces on the screw nut 130 with wet or dirty hands.

The ridges 240 are longer in the axial direction than the ribs 230 and the ridges 240 may divide the haptic region 180 into a plurality of groups of ribs 230. Although not required, in an example embodiment, the ridges 240 may be placed about sixty degrees apart from each other such that six ridges 240 divide the haptic region 180 into a corresponding number (i.e., six) of segments of ribs 230. The ribs 230 are provided in groups separated by the ridges 240).

The ridges 240 are further modified to include one or more grooves or protrusions that also extend in the axial direction. For example, as shown in FIG. 2, the ridges 240 may include at least one groove 242 disposed at an external surface thereof, extending in the axial direction. The at least one groove 242 is also longer than the ribs. The groove 242 may provide yet further surface discontinuity in order to further improve the grip that the user or operator is able to obtain on the screw nut 130.

The ridges 240 may extend entirely from the first end 200 to the second end 210. Moreover the ridges 240 taper with respect to either or both of their width and their depth as they extend toward the second end 210. In some cases, the tapering in the depth dimension may only occur in the immediate vicinity of the second end 210 as shown in FIG. 2. The screw nut 130 includes an annular connector 260 disposed proximate to the first end 200. The annular connector 260 may form a raised portion extending circumferentially around the external periphery of the screw nut 130 at the second end 210. As such, the ridges 240 extend from the annular connector 260 toward the second end 210. The annular connector 260 may have the same depth as the ridges 240 and thus, the segments of ribs 230 that are provided between the ridges 240 may sit at a lower elevation (e.g., at a depth below the height of the ridges 240 and the annular connector 260). The combination of higher elevation ridges 240 and lower elevation ribs 230 may provide the haptic region 180 with a combination of easily graspable features to facilitate location of fingers of the operator onto the haptic region 180 and screwing the screw nut 130 in different conditions.

The screw nut 130 may be made from molded plastic, composite material, metal, or any other suitable material that has sufficient rigidity and durability to be used in an outdoor watering environment. The screw nut 130 is provided to have a somewhat "domed" shape while proceeding toward the second end 210. As such a diameter of the external periphery of the screw nut 130 may decrease from the first end 200 to the second end 210. Meanwhile, although the threaded portion 212 extends toward the second end 210 from the first end 200, the threaded portion 212 only extends over about half of the axial length of the screw nut 130 along the internal periphery. The tapering of the diameter of the external periphery increases as the second end 210 is approached so that the diameter of the screw nut 130 remains relatively constant at the portion of the screw nut 130 where the threaded portion 212 is provided, but the diameter rapidly decreases after the threaded portion 212, closer to the second end 210. In some cases, the internal periphery may have a constant diameter where the threaded portion 212 is located, while the diameter at the corresponding external periphery region decreases slightly while moving away from the first end 200. Meanwhile, the diameter of the internal and external periphery decreases approaching the second end 210 after the threaded portion 212.

With the screw nut 130 being provided with the domed shape, the provision of the haptic region 180 to guide the user to gripping the ridges 240 at a middle portion thereof is even more helpful. However, still further physical structures may be provided to enhance grip and/or the comfort level of the user when grasping the screw nut 130. As shown in FIG. 2B, the ribs 230 are provided to have a gently decreasing external diameter that begins from the same depth or level as a bottom flat region 290. Meanwhile, at the other end of the ribs 230 (i.e., the top end), a top flat region 292 is provided at a substantially different depth than the depth of the ribs 230 and a prompt jump in depth change is provided at discontinuity 294 at the top end of the ribs 230. This structure may facilitate gripping further, and may also make the grip more comfortable for the user.

The screw nut 130 is not limited to employment in the hose connector 100 of FIGS. 1 and 2. In this regard, the screw nut 130 is be used as a clamp nut on a repair assembly 300 that may connect two pieces of hose. Thus, the hose connector 100 and the repair assembly 300 should each be appreciated as examples of hose connector devices that may employ example embodiments. In this regard, the two pieces of hose could be created by cutting a damaged part of hose out and splicing the remaining two hose sections together in the opposing ends of the repair assembly 300, or the two pieces of hose could be separate (undamaged) pieces of hose. Thus, rather than technically "repairing" damaged hose, the repair assembly 300 may just extend hose reach by enabling the operator to combine two pieces of hose.

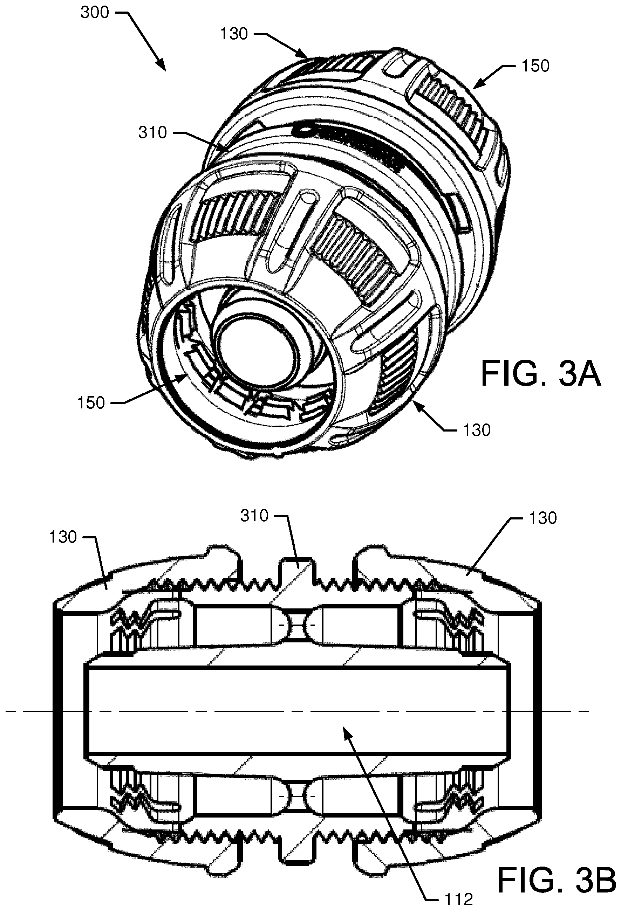

FIG. 3 illustrates a perspective side view of two screw nuts 130, one being on each respective end of the repair assembly 300 in accordance with an example embodiment. As can be appreciated from FIG. 3, the repair assembly 300 may include a main body 310 that includes two body portions that are each essentially identical to the second end 116 of the hose connector 100 described above. As such, the repair assembly 300 may essentially put two second ends 116 back to back to form the main body 310 so that the screw nuts 130 can be used to clamp hose to each hose coupling portion 150 that lies underneath the respective screw nuts 130 shown in FIG. 3. It is also possible that the screw nut 130 could find other uses within a water equipment system.

A hose coupling device of an example embodiment includes a main body, a sleeve portion and a screw nut. The main body defines a through channel for water flow between a first end of the device to a second end of the device. The through channel may extend along an axis of the device. The main body further defines a coupler receiver portion disposed at the first end of the device and a hose coupling portion disposed at the second end of the device. The sleeve portion may slidably engage the main body to releasably engage a coupler received in the coupler receiver portion based on movement of the sleeve portion in an axial direction. The screw nut is disposed proximate to the hose coupling portion to selectively facilitate engagement of the hose coupling portion with a hose inserted at the hose coupling portion by exerting a clamping force on the hose responsive to tightening of the screw nut. The screw nut includes an annular body having first end and a second end. An internal periphery of the annular body includes a threaded portion at the first end of the annular body. An external periphery of the annular body includes a haptic region extending around the external periphery. The haptic region is disposed at a portion of the external periphery that is spaced apart from both the first end and the second end of the annular body, and the haptic region extends over less than half of the axial length of the screw nut (i.e., the length of the screw nut in the axial direction). Moreover, the haptic region is spaced apart from the first and second ends by a distance at least equal to the length of the haptic region in the axial direction. A repair assembly according to an example embodiment may include a main body portion that has two hose coupling portions and two corresponding screw nuts similar to the one described above.

The screw nut or device employing the screw nut of some embodiments may include additional features that may be optionally added either alone or in combination with each other. The haptic region includes a plurality of ribs extending in the axial direction. Guide ridges are provided at equidistant intervals around the external periphery of the screw nut. The guide ridges extend along the external periphery of the screw nut substantially in the axial direction and the guide ridges are longer in the axial direction than the ribs to divide the haptic region into groups of ribs. The guide ridges include at least one groove disposed at an external surface thereof, extending in the axial direction. The at least one groove may be longer than the ribs. The guide ridges extend from the first end to the second end and taper in depth proximate to the second end. The guide ridges may extend from an annular connector disposed at the external periphery at the first end.

In some embodiments in addition to the optional modifications or augmentations described below. For example, in some embodiments, the guide ridges may be provided to facilitate location of fingers of the operator onto the haptic region. Alternatively or additionally, the haptic region may be disposed at a midpoint between the first and second ends of the annular body. Alternatively or additionally, a diameter of the external periphery may decrease from the first end to the second end.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A hose coupling device (100) comprising:
a main body (110) defining a through channel (112) for water flow between a first end (114) of the device (100) to a second end (116) of the device (100), the through channel (112) extending along an axis (118) of the device (100),
the main body (110) further defining a coupler receiver portion (140) disposed at the first end (114) of the device (100) and a hose coupling portion (150) disposed at the second end (116) of the device (100);
a sleeve portion (120) slidably engaging the main body (110) to releasably engage a coupler received in the coupler receiver portion (140) based on movement of the sleeve portion (120) in an axial direction (152); and
a screw nut (130) disposed proximate to the hose coupling portion (150) to selectively facilitate engagement of the hose coupling portion (150) with a hose (170) inserted at the hose coupling portion (150) by exerting a clamping force on the hose (170) responsive to tightening of the screw nut (130),
wherein the screw nut (130) comprises an annular body having first end (200) and a second end (210),
wherein an internal periphery of the annular body includes a threaded portion (212) at the first end (200) of the annular body,
wherein an external periphery of the annular body includes a haptic region (180) defined by a plurality of ribs (230) extending in the axial direction around the external periphery, the haptic region (180) being disposed at a portion of the external periphery that is spaced apart from both the first end (200) and the second end (210) of the annular body,
wherein said external periphery of said annular body is arranged free of said plurality of ribs (230) between said haptic region (180) and both the first end (200) and the second end (210) of said annular body,
wherein the screw nut (130) further comprises guide ridges (240) disposed at equidistant intervals around the external periphery, the guide ridges (240) extending in the axial direction (152) and being longer in the axial direction (152) than the ribs (230) to divide the haptic region (180) into groups of ribs (230),
the haptic region (180) extends over less than half of a length of the screw nut (130 in the axial direction (152);
wherein the guide ridges (240) extend from an annular connector (260) disposed at the external periphery at the first end (200),
wherein the guide ridges (240) extend from the first end (200) to the second end (210) and taper in depth proximate to the second end (210),
**characterized in that,**
the guide ridges (240) include at least one groove (242) disposed in an external surface thereof,
wherein the at least one groove (242) is longer than the ribs (230),
and wherein the guide ridges (240) facilitate location of fingers of an operator onto the haptic region (180),
wherein the haptic region (180) is disposed at a midpoint between the first and second ends (200, 210) of the annular body
wherein the screw nut has a domed shape while proceeding towards the second end, as such the diameter of the external periphery of the screw nut decreases from the first end to the second end,
wherein the threaded portion extents towards the second end from the first end and by this only extends over about half of the axial length of the screw nut along the internal periphery,
and wherein the ribs have a gently decreasing external diameter that begin from the same depth or level as a bottom flat region and at the other end of the ribs a top flat region is provided at a substantially different depth than the depth of the ribs such that a prompt jump in depth change is provided at a discontinuity at the top end of the ribs.

2. A hose coupling device (300) comprising:
a main body (310) defining a through channel for water flow between a first end of the device (300) to a second end of the device (300),
the main body (110) further defining a hose coupling portion (150) disposed at one of the first end or the second end of the device (300); and
a screw nut (130) disposed proximate to the hose coupling portion (150) to selectively facilitate engagement of the hose coupling portion (150) with a hose (170) inserted at the hose coupling portion (150) by exerting a clamping force on the hose (170) responsive to tightening of the screw nut (130),
wherein the screw nut (130) comprises an annular body having first end (200) and a second end (210),
wherein an internal periphery of the annular body includes a threaded portion (212) at the first end (200) of the annular body,
wherein an external periphery of the annular body includes a haptic region (180) extending around the external periphery, the haptic region (180) being disposed at a portion of the external periphery that is spaced apart from both the first end (200) and the second end (210) of the annular body, the haptic region (180) extending over less than half of a length of the screw nut (130),
wherein the main body (310) includes two hose coupling portions (150) disposed back to back, and wherein the device (300) includes two screw nuts (130) corresponding to each respective one of the two hose coupling portions (150),
wherein the haptic region (180) comprises a plurality of ribs (230) extending in the axial direction (152),
wherein said external periphery of said annular body is arranged free of said plurality of ribs (230) between said haptic region (180) and both the first end (200) and the second end (210) of said annular body,
wherein the screw nut (130) further comprises guide ridges (240) disposed at equidistant intervals around the external periphery, the guide ridges (240) extending in the axial direction (152) and being longer in the axial direction (152) than the ribs (230) to divide the haptic region (180) into groups of ribs (230),
wherein the guide ridges (240) extend from an annular connector (260) disposed at the external periphery at the first end (200),
wherein the guide ridges (240) extend from the first end (200) to the second end (210) and taper in depth proximate to the second end (210),
**characterized in that,**
the guide ridges (240) include at least one groove (242) disposed in an external surface thereof,
wherein the at least one groove (242) is longer than the ribs (230),
and wherein the guide ridges (240) facilitate location of fingers of an operator onto the haptic region (180),
wherein the haptic region (180) is disposed at a midpoint between the first and second ends (200, 210) of the annular body
wherein the screw nut has a domed shape while proceeding towards the second end, as such the diameter of the external periphery of the screw nut decreases from the first end to the second end,
wherein the threaded portion extents towards the second end from the first end and by this only extends over about half of the axial length of the screw nut along the internal periphery,
and wherein the ribs have a gently decreasing external diameter that begin from the same depth or level as a bottom flat region and at the other end of the ribs a top flat region is provided at a substantially different depth than the depth of the ribs such that a prompt jump in depth change is provided at a discontinuity at the top end of the ribs.

## Patentansprüche

1. Schlauchkupplungsvorrichtung (100), umfassend:
einen Hauptkörper (110), der einen Durchgangskanal (112) für den Wasserfluss zwischen einem ersten Ende (114) der Vorrichtung (100) und einem zweiten Ende (116) der Vorrichtung (100) definiert, wobei sich der Durchgangskanal (112) entlang einer Achse (118) der Vorrichtung (100) erstreckt,
wobei der Hauptkörper (110) des Weiteren einen Kupplungsaufnahmeabschnitt (140), der an dem ersten Ende (114) der Vorrichtung (100) angeordnet ist, und einen Schlauchkupplungsabschnitt (150), der an dem zweiten Ende (116) der Vorrichtung (100) angeordnet ist, definiert;
einen Hülsenabschnitt (120), der gleitend in den Hauptkörper (110) eingreift, um eine im Kupplungsaufnahmeabschnitt (140) aufgenommene Kupplung lösbar in Eingriff zu nehmen basierend auf der Bewegung des Hülsenabschnitts (120) in einer axialen Richtung (152); und
eine Schraubenmutter (130), die in der Nähe des Schlauchkupplungsabschnitts (150) angeordnet ist, um selektiv das Eingreifen des Schlauchkupplungsabschnitts (150) mit einem an dem Schlauchkupplungsabschnitt (150) eingesetzten Schlauch (170) durch Ausüben einer Klemmkraft auf den Schlauch (170) als Reaktion auf das Anziehen der Schraubenmutter (130) zu erleichtern,
wobei die Schraubenmutter (130) einen ringförmigen Körper mit einem ersten Ende (200) und einem zweiten Ende (210) umfasst,
wobei ein Innenumfang des ringförmigen Körpers einen Gewindeabschnitt (212) an dem ersten Ende (200) des ringförmigen Körpers beinhaltet,
wobei ein Außenumfang des ringförmigen Körpers einen haptischen Bereich (180) beinhaltet, der durch eine Vielzahl von Rippen (230) definiert ist, die sich in axialer Richtung um den Außenumfang herum erstrecken, wobei der haptische Bereich (180) an einem Abschnitt des Außenumfangs angeordnet ist, der sowohl von dem ersten Ende (200) als auch von dem zweiten Ende (210) des ringförmigen Körpers beabstandet ist,
wobei der Außenumfang des Ringkörpers frei von der Vielzahl von Rippen (230) zwischen dem haptischen Bereich (180) und sowohl dem ersten Ende (200) als auch dem zweiten Ende (210) des Ringkörpers angeordnet ist,
wobei die Schraubenmutter (130) des Weiteren Führungsleisten (240) umfasst, die in äquidistanten Abständen um den Außenumfang herum angeordnet sind, wobei sich die Führungsleisten (240) in axialer Richtung (152) erstrecken und in axialer Richtung (152) länger sind als die Rippen (230), um den haptischen Bereich (180) in Gruppen von Rippen (230) aufzuteilen,
wobei der haptische Bereich (180) sich über weniger als die Hälfte einer Länge der Schraubenmutter (130 in axialer Richtung (152) erstreckt;
wobei sich die Führungsleisten (240) von einem ringförmigen Verbinder (260) erstrecken, der an dem Außenumfang an dem ersten Ende (200) angeordnet ist,
wobei sich die Führungsleisten (240) von dem ersten Ende (200) bis zu dem zweiten Ende (210) erstrecken und sich in der Tiefe nahe dem zweiten Ende (210) verjüngen,
**dadurch gekennzeichnet, dass**,
die Führungsleisten (240) mindestens eine Nut (242) aufweisen, die in einer Außenfläche davon angeordnet ist,
wobei die mindestens eine Nut (242) länger ist als die Rippen (230),
und wobei die Führungsleisten (240) das Positionieren der Finger eines Bedieners auf dem haptischen Bereich (180) erleichtern,
wobei der haptische Bereich (180) in einem Mittelpunkt zwischen dem ersten und zweiten Ende (200, 210) des ringförmigen Körpers angeordnet ist.
wobei die Schraubenmutter eine gewölbte Form aufweist, während sie sich in Richtung des zweiten Endes bewegt, wodurch der Durchmesser des Außenumfangs der Schraubenmutter von dem ersten Ende bis zu dem zweiten Ende abnimmt,
wobei sich der Gewindeabschnitt von dem ersten Ende in Richtung des zweiten Endes erstreckt und sich dadurch nur etwa über die Hälfte der axialen Länge der Schraubenmutter entlang des Innenumfangs erstreckt,
und wobei die Rippen einen leicht abnehmenden Außendurchmesser aufweisen, der aus der gleichen Tiefe oder Ebene wie ein unterer flacher Bereich beginnt, und an dem anderen Ende der Rippen ein oberer flacher Bereich in einer im Wesentlichen anderen Tiefe als die Tiefe der Rippen vorgesehen ist, so dass ein unverzüglicher Sprung der Tiefenänderung bei einer Diskontinuität am oberen Ende der Rippen vorgesehen ist.

2. Schlauchkupplungsvorrichtung (300), umfassend:
einen Hauptkörper (310), der einen Durchgangskanal für den Wasserfluss zwischen einem ersten Ende der Vorrichtung (300) und einem zweiten Ende der Vorrichtung (300) definiert,
wobei der Hauptkörper (110) des Weiteren einen Schlauchkupplungsabschnitt (150) definiert, der an dem ersten Ende oder dem zweiten Ende der Vorrichtung (300) angeordnet ist; und
eine Schraubenmutter (130), die in der Nähe des Schlauchkupplungsabschnitts (150) angeordnet ist, um das Eingreifen des Schlauchkupplungsabschnitts (150) mit einem an dem Schlauchkupplungsabschnitt (150) eingesetzten Schlauch (170) durch Ausüben einer Klemmkraft auf den Schlauch (170) als Reaktion auf das Anziehen der Schraubenmutter (130) zu erleichtern,
wobei die Schraubenmutter (130) einen ringförmigen Körper mit einem ersten Ende (200) und einem zweiten Ende (210) umfasst,
wobei ein Innenumfang des ringförmigen Körpers einen Gewindeabschnitt (212) an dem ersten Ende (200) des ringförmigen Körpers beinhaltet,
wobei ein Außenumfang des ringförmigen Körpers einen haptischen Bereich (180) beinhaltet, der sich um den Außenumfang erstreckt, wobei der haptische Bereich (180) an einem Abschnitt des Außenumfangs angeordnet ist, der sowohl von dem ersten Ende (200) als auch von dem zweiten Ende (210) des ringförmigen Körpers beabstandet ist,
wobei sich der haptische Bereich (180) über weniger als die Hälfte einer Länge der Schraubenmutter (130) erstreckt,
wobei der Hauptkörper (310) zwei Schlauchkupplungsabschnitte (150) beinhaltet, die Back-to-Back angeordnet sind, und wobei die Vorrichtung (300) zwei Schraubenmuttern (130) beinhaltet, die jedem einzelnen der beiden Schlauchkupplungsabschnitte (150) entsprechen,
wobei der haptische Bereich (180) eine Vielzahl von Rippen (230) umfasst, die sich in der axialen Richtung (152) erstrecken,
wobei der Außenumfang des ringförmigen Körpers frei von der Vielzahl von Rippen (230) zwischen dem haptischen Bereich (180) und sowohl dem ersten Ende (200) als auch dem zweiten Ende (210) des Ringkörpers angeordnet ist,
wobei die Schraubenmutter (130) des Weiteren Führungsleisten (240) umfasst, die in äquidistanten Abständen um den Außenumfang herum angeordnet sind, wobei sich die Führungsleisten (240) in axialer Richtung (152) erstrecken und in axialer Richtung (152) länger sind als die Rippen (230), um den haptischen Bereich (180) in Gruppen von Rippen (230) aufzuteilen,
wobei sich die Führungsleisten (240) von einem ringförmigen Verbinder (260) erstrecken, der an dem Außenumfang an dem ersten Ende (200) angeordnet ist,
wobei sich die Führungsleisten (240) von dem ersten Ende (200) bis zu dem zweiten Ende (210) erstrecken und sich in der Tiefe nahe dem zweiten Ende (210) verjüngen,
**dadurch gekennzeichnet, dass**,
die Führungsleisten (240) mindestens eine Nut (242) aufweisen, die in einer Außenfläche davon angeordnet ist,
wobei die mindestens eine Nut (242) länger ist als die Rippen (230),
und wobei die Führungsleisten (240) das Positionieren der Finger eines Bedieners auf dem haptischen Bereich (180) erleichtern,
wobei der haptische Bereich (180) in einem Mittelpunkt zwischen dem ersten und zweiten Ende (200, 210) des ringförmigen Körpers angeordnet ist.
wobei die Schraubenmutter eine gewölbte Form aufweist, während sie sich in Richtung des zweiten Endes bewegt, wodurch der Durchmesser des Außenumfangs der Schraubenmutter von dem ersten Ende bis zu dem zweiten Ende abnimmt,
wobei sich der Gewindeabschnitt von dem ersten Ende in Richtung des zweiten Endes erstreckt und sich dadurch nur etwa über die Hälfte der axialen Länge der Schraubenmutter entlang des Innenumfangs erstreckt,
und wobei die Rippen einen leicht abnehmenden Außendurchmesser aufweisen, der aus der gleichen Tiefe oder Ebene wie ein unterer flacher Bereich beginnt, und an dem anderen Ende der Rippen ein oberer flacher Bereich in einer im Wesentlichen anderen Tiefe als die Tiefe der Rippen vorgesehen ist, so dass ein unverzüglicher Sprung der Tiefenänderung bei einer Diskontinuität am oberen Ende der Rippen vorgesehen ist.

## Revendications

1. Dispositif d'accouplement de tuyau (100) comprenant:
un corps principal (110) définissant un canal de passage (112) pour l'écoulement d'eau entre une première extrémité (114) du dispositif (100) et une seconde extrémité (116) du dispositif (100), le canal de passage (112) s'étendant le long d'un axe (118) du dispositif (100),
le corps principal (110) définissant en outre une partie réceptrice de coupleur (140) disposée à la première extrémité (114) du dispositif (100) et une partie de raccord de flexible (150) disposée à la seconde extrémité (116) du dispositif (100);
une partie de manchon (120) engageant de manière coulissante le corps principal (110) pour engager de manière amovible un coupleur reçu dans la partie réceptrice de coupleur (140) en fonction du mouvement de partie de manchon (120) dans une direction axiale (152); et
un écrou à vis (130) disposé à proximité de la partie de raccord de tuyau (150) pour faciliter sélectivement l'engagement de la partie de raccord de tuyau (150) avec un tuyau (170) inséré à la partie de raccord de tuyau (150) en exerçant une force de serrage sur le tuyau (170) sensible au serrage de l'écrou à vis (130),
dans lequel l'écrou à vis (130) comprend un corps annulaire ayant une première extrémité (200) et une seconde extrémité (210),
dans lequel une périphérie interne du corps annulaire comprend une partie filetée (212) à la première extrémité (200) du corps annulaire,
dans lequel une périphérie externe du corps annulaire comprend une région haptique (180) définie par une pluralité de nervures (230) s'étendant dans la direction axiale autour de la périphérie externe, la région haptique (180) étant disposée à une portion de la périphérie externe qui est espacée soit de la première extrémité (200) que de la seconde extrémité (210) du corps annulaire,
dans lequel ladite périphérie externe dudit corps annulaire est disposée sans ladite pluralité de nervures (230) entre ladite région haptique (180) et la première extrémité (200) ainsi que la seconde extrémité (210) dudit corps annulaire,
dans lequel l'écrou à vis (130) comprend en outre nervures de guidage (240) disposées à intervalles équidistants autour de la périphérie externe, les nervures de guidage (240) s'étendant dans la direction axiale (152) et étant plus longues dans la direction axiale (152) que les nervures (230) pour diviser la région haptique (180) en groupes de nervures (230),
la région haptique (180) s'étend sur moins de la moitié d'une longueur de l'écrou à vis (130) dans la direction axiale (152);
dans lequel les nervures de guidage (240) s'étendent à partir d'un connecteur annulaire (260) disposé à la périphérie externe à la première extrémité (200),
dans lequel les nervures de guidage (240) s'étendent de la première extrémité (200) à la seconde extrémité (210) et s'affinent en profondeur à proximité de la seconde extrémité (210),
**caractérisé en ce que**,
les nervures de guidage (240) comprennent au moins une rainure (242) disposée dans une surface externe de celles-ci,
dans lequel l'au moins une rainure (242) est plus longue que les nervures (230),
et dans lequel les nervures de guidage (240) facilitent l'emplacement des doigts d'un opérateur sur la région haptique (180),
dans lequel la région haptique (180) est disposée à mi-chemin entre les première et seconde extrémités (200, 210) du corps annulaire
dans lequel l'écrou à vis a une forme bombée tout en avançant vers la seconde extrémité, de sorte que le diamètre de la périphérie externe de l'écrou à vis diminue de la première extrémité à la seconde extrémité,
dans lequel la partie filetée s'étend vers la seconde extrémité à partir de la première extrémité et ne s'étend ainsi que sur environ la moitié de la longueur axiale de l'écrou de la vis le long de la périphérie interne,
et dans lequel les nervures ont un diamètre extérieur décroissant doucement qui commence à la même profondeur ou au même niveau qu'une région plate inférieure et à l'autre extrémité des nervures, une région plate supérieure est prévue à une profondeur sensiblement différente de la profondeur des nervures de sorte qu'un changement rapide de la profondeur est prévu à une discontinuité à l'extrémité supérieure des.

2. Dispositif d'accouplement de tuyau (300) comprenant:
un corps principal (310) définissant un canal de passage pour l'écoulement d'eau entre une première extrémité du dispositif (300) et une seconde extrémité du dispositif (300),
le corps principal (110) définissant en outre une partie de raccord de tuyau (150) disposée à une de la première extrémité ou de la seconde extrémité du dispositif (300); et
un écrou à vis (130) disposé à proximité de la partie de raccord de tuyau (150) pour faciliter sélectivement l'engagement de la partie de raccord de tuyau (150) avec un tuyau (170) inséré à la partie de raccord de tuyau (150) en exerçant une force de serrage sur le tuyau (170) sensible au serrage de l'écrou à vis (130),
dans lequel l'écrou à vis (130) comprend un corps annulaire ayant une première extrémité (200) et une seconde extrémité (210),
dans lequel une périphérie interne du corps annulaire comprend une partie filetée (212) à la première extrémité (200) du corps annulaire,
dans lequel une périphérie externe du corps annulaire comprend une région haptique (180) s'étendant autour de la périphérie externe, la région haptique (180) étant disposée à une portion de la périphérie externe qui est espacée soit de la première extrémité (200) que de la seconde extrémité (210) du corps annulaire, la région haptique (180) s'étendant sur moins de la moitié d'une longueur de l'écrou à vis (130),
dans lequel le corps principal (310) comprend deux parties de raccord de tuyau (150) disposées l'une en succession de l'autre , et dans lequel le dispositif (300) comprend deux écrous à vis (130) correspondants à chacune des deux parties de raccord de tuyau (150),
dans lequel la région haptique (180) comprend une pluralité de nervures (230) s'étendant dans la direction axiale (152),
dans lequel ladite périphérie externe dudit corps annulaire est disposée sans ladite pluralité de nervures (230) entre ladite région haptique (180) et la première extrémité (200) ainsi que la seconde extrémité (210) dudit corps annulaire,
dans lequel l'écrou à vis (130) comprend en outre nervures de guidage (240) disposées à intervalles équidistants autour de la périphérie externe, les nervures de guidage (240) s'étendant dans la direction axiale (152) et étant plus longues dans la direction axiale (152) que les nervures (230) pour diviser la région haptique (180) en groupes de nervures (230),
dans lequel les nervures de guidage (240) s'étendent à partir d'un connecteur annulaire (260) disposé à la périphérie externe à la première extrémité (200),
dans lequel les nervures de guidage (240) s'étendent de la première extrémité (200) à la seconde extrémité (210) et s'affinent en profondeur à proximité de la seconde extrémité (210),
**caractérisé en ce que**,
les nervures de guidage (240) comprennent au moins une rainure (242) disposée dans une surface externe de celles-ci,
dans lequel l'au moins une rainure (242) est plus longue que les nervures (230),
et dans lequel les nervures de guidage (240) facilitent l'emplacement des doigts d'un opérateur sur la région haptique (180),
dans lequel la région haptique (180) est disposée à mi-chemin entre les première et seconde extrémités (200, 210) du corps annulaire
dans lequel l'écrou à vis a une forme bombée tout en avançant vers la seconde extrémité, de sorte que le diamètre de la périphérie externe de l'écrou à vis diminue de la première extrémité à la seconde extrémité,
dans lequel la partie filetée s'étend vers la seconde extrémité à partir de la première extrémité et ne s'étend ainsi que sur environ la moitié de la longueur axiale de l'écrou de la vis le long de la périphérie interne,
et dans lequel les nervures ont un diamètre extérieur décroissant doucement qui commence à la même profondeur ou au même niveau qu'une région plate inférieure et à l'autre extrémité des nervures, une région plate supérieure est prévue à une profondeur sensiblement différente de la profondeur des nervures de sorte qu'un changement rapide de la profondeur est prévu à une discontinuité à l'extrémité supérieure des.
